(19) Europäisches Patentamt
European Patent Office
Office européen des brevets

(11) Numéro de publication: **0 097 078 B1**

# (12) FASCICULE DE BREVET EUROPEEN

(45) Date de publication du fascicule du brevet: **08.10.86**

(51) Int. Cl.⁴: **H 01 M 6/14**

(21) Numéro de dépôt: **83401106.6**

(22) Date de dépôt: **01.06.83**

(54) **Générateurs électrochimiques dont les milieux électrolytiques sont constitués par des ammoniacates de sels d'un métal identique au métal de l'anode.**

(30) Priorité: **16.06.82 FR 8210488**
**22.02.83 FR 8302849**

(43) Date de publication de la demande:
**28.12.83 Bulletin 83/52**

(45) Mention de la délivrance du brevet:
**08.10.86 Bulletin 86/41**

(84) Etats contractants désignés:
**BE CH DE FR GB IT LI NL**

(56) Documents cités:
**US - A - 2 863 933**
**US - A - 2 937 219**
**US - A - 3 510 357**
**US - A - 3 669 743**
**US - A - 3 764 385**

**A. BRUYLANTS et al.: "Chimie Générale", 1961, chapitre II.- Chimie Minérale, Librairie Universitaire, Louvain, BE.**
**P. PASCAL: "Nouveau traité de chimie minérale", 1956, Tome X, "Azote - Phosphore", Masson et Cie., Paris, FR.**

(73) Titulaire: **ELECTRICITE DE FRANCE Service National, 2, rue Louis Murat, F-75008 Paris (FR)**

(72) Inventeur: **Badoz, Janine, 11 rue Monticelli, F-75014 Paris (FR)**
Inventeur: **Bardin, Michelle, 33 rue du Moulin à Vent, F-94370 Sucy-en-Brie (FR)**
Inventeur: **Bernard, Claude, Routelle, F-25410 Saint Vit (FR)**
Inventeur: **Herlem, Michel, 60 avenue des Etats-Unis, F-78000 Versailles (FR)**
Inventeur: **Robert, Guy, Chemin du Pommeret Morre, F-25660 Saone (FR)**
Inventeur: **Thiebault, André, 46 rue des Envierges, F-75020 Paris (FR)**

(74) Mandataire: **Ahner, Francis et al, CABINET REGIMBEAU 26, avenue Kléber, F-75116 Paris (FR)**

EP 0 097 078 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne des générateurs électrochimiques du type comportant une anode constituée par un métal ou un alliage métallique très réducteurs, une cathode constituée par un matériau réductible, ainsi qu'un électrolyte liquide ou solide pratiquement exempt d'eau dans lequel plongent l'anode et la cathode.

L'état de la technique antérieure peut par exemple être illustré par les documents suivants US-A 2 937 219, US-A 3 669 743 et US-A 2 863 933. Le brevet US-A 2 937 219 concerne une cellule électrochimique dont l'électrolyte contient de l'ammoniac liquide à titre de solvant principal ainsi que diverses substances dissoutes et ionisées de manière à élever la conductivité électrique de l'électrolyte. Cet électrolyte baignant l'anode doit obligatoirement contenir des ions ammonium. C'est d'ailleurs la raison pour laquelle ce brevet préconise l'utilisation d'eau (voir colonne 6) qui sera volontairement exclue de l'électrolyte selon l'invention.

Comme cela apparaîtra plus loin, l'objet de la présente invention se distingue en outre nettement de cette technique antérieure du fait que c'est le même électrolyte qui baigne les deux électrodes. La présence d'eau dans un tel électrolyte entraînerait une auto-décharge du générateur électrochimique, c'est-à-dire une consommation des électrodes telles que Na, Li, etc. Le brevet US-A 3 669 743 envisage l'utilisation d'un ammoniacate de chlorure de zinc dans une cellule électrochimique ayant une électrode de zinc et une électrode d'argent. Le brevet US-A 2 863 933 décrit une cellule électrolytique comportant un électrolyte constitué par la combinaison de sels et d'ammoniac liquide anhydre. Le but poursuivi semble être le désir d'obtenir une batterie utilisable nettement au-dessus de 0°C. Contrairement à l'objet de la présente demande, le brevet US-A 2 863 933 décrit une cellule qui nécessite un anolyte et un catholyte différents l'un de l'autre et donc obligatoirement séparés par un diaphragme. L'anolyte contient au moins un sel du métal de l'anode, dissous dans l'ammoniac liquide, les sels préférés étant les thiocyanates et les perchlorates. En revanche, le catholyte est une solution dans l'ammoniac liquide d'un sel des cations $NH_4$ alcalin ou alcalino-terreux.

Néanmoins, le besoin en générateurs électrochimiques, pouvant fonctionner aussi bien à basse température ($T \geqslant -80°C$) qu'à température ordinaire ou à température élevée ($T \leqslant 400°C$), donner une tension élevée et délivrer une grande densité de courant se fait de plus en plus sentir. Jusqu'à présent l'emploi de solvants non aqueux ne semble pas avoir débouché sur le plan pratique, notamment à cause de la faible solubilité des électrolytes, qui conduit à des résistances élevées. Tel n'est cependant pas le cas de l'ammoniac liquide qui est un solvant pouvant dissoudre des sels jusqu'à des concentrations de l'ordre de 10 M. Certains de ces sels conduisent, avec $NH_3$, à la formation d'ammoniacates soit liquides, soit solides.

La présente invention a précisément eu pour but de mettre au point de tels générateurs électrochimiques du type défini ci-dessus, en faisant appel à des milieux électrolytiques constitués par des ammoniacates.

Conformément à la présente invention, ce type générateur électrochimique est caractérisé en ce que ledit électrolyte est constitué par un ou plusieurs ammoniacates d'au moins un sel cation du métal de l'anode ou d'un sel d'un cation d'un métal plus réducteur que le métal plus réducteur que le métal ou l'alliage métallique de l'anode.

Selon d'autres caractéristiques de l'invention, le métal ou les métaux de l'alliage métallique de l'anode et le ou les cation(s) métallique(s) de ou des ammoniacate(s) est ou sont choisi(s) parmi les métaux alcalins, alcalino-terreux et l'aluminium, et le ou les sel(s) de ou des ammoniacate(s) est ou sont choisi(s) parmi les halogénures, tels que les bromures, chlorures et iodures, ainsi que les perhalogénates, tels que les perchlorates, et d'une manière générale les sels comportant des anions difficilement réductibles (qui ne sont pas réduits par le métal ou l'alliage de métaux du pôle ⊖) et aussi difficilement oxydables (qui ne sont pas oxydés par le ou les matériau(x) qui compose(nt) le pôle ⊕) tels que les chloroaluminates et les fluoroborates.

On peut par exemple réaliser une pile comme indiqué ci-après:

$Na/Li\,ClO_4 \times NH_3/CuO$
$Na/Li\,ClO_4 \times NH_3/MnO_2$
$Na/Li\,ClO_4 \times NH_{\circ}/AgO$
$Na/Li\,ClO_4 \times NH_3/(SN)_x$

L'utilisation de tels ammoniacates en tant que milieux électrolytiques permet d'obtenir des milieux très conducteurs, liquides ou solides, et susceptibles d'être pratiquement complètement deshydratés. De tels milieux électrolytiques présentent en outre l'avantage d'avoir une gamme très étendue de températures d'existence et d'utilisation allant du point de congélation de l'ammoniac jusqu'à des températures pouvant être supérieures à environ 400°C.

Globalement les ammoniacates possèdent les propriétés essentielles de l'ammoniac, mais présentent en plus un certain nombre d'avantages particulièrement décisifs dans le domaine de leur application en tant que milieux électrolytiques. Ainsi, la pression de décomposition des ammoniacates est considérablement plus basse que la tension de vapeur de l'ammoniac pur à la même température. En outre, contrairement à l'ammoniac, ils ne dissolvent pas les métaux très réducteurs tels que les métaux alcalins, alcalino-terreux et l'aluminium susceptibles d'être utilisés en tant que matériau anodique. On notera par exemple que le lithium n'est absolument pas soluble dans l'ammoniacate de perchlorate de lithium liquide, pas plus que le sodium dans l'ammoniacate de perchlorate de lithium liquide.

Conformément à la présente invention, les ammoniacates sont utilisés à l'état pratiquement anhydre. En effet, la présence d'eau en quantité importante dans les ammoniacates, par exemple supérieure à environ 5% en poids, conduirait à deux types d'inconvénients majeurs. Il se produirait tout d'abord un autoblocage de la cellule par consommation de l'anode, par exemple réalisée à base de sodium ou de lithium, à la suite de son attaque par l'eau. On observerait également la formation d'une couche inhibitrice d'hydroxyde du métal anodique. Ainsi, dans la pratique on fera appel à des électrolytes constitués par des ammoniacates pratiquement exempts d'eau. La présence de quelques pourcents d'eau peut toutefois être tolérée.

Les ammoniacates étant des combinaisons d'un ou plusieurs sels et de molécules d'ammoniac, leur préparation à l'état anhydre peut bien sûr s'effectuer à partir de sels anhydres et d'ammoniac anhydre. Si l'obtention d'ammoniac anhydre, ou ne contenant que de très faibles quantités d'eau, ne pose aucun problème dans la pratique, il n'en est pas de même des sels qui sont nécessaires à la formation des ammoniacates. En effet, ces sels sont très souvent hygroscopiques ($LiClO_4$, NaI, etc.) et sont donc obtenus avec des quantités d'eau relativement importantes de plusieurs pour cent en poids. La déhydratation de ces sels peut s'effectuer par des moyens physiques tels que vide poussé et/ou température supérieure à la température ambiante, mais ces techniques sont généralement longues et n'aboutissent finalement jamais à un sel parfaitement anhydre.

La présente invention a également pour but d'obtenir un ammoniacate à l'état pratiquement anhydre, en vue de son utilisation en tant qu'électrolyte dans un générateur électrochimique du type précité. Selon cette caractéristique additionnelle, l'ammoniacate est préparé par réaction du sel M″X d'un cation d'un métal M″ au moins aussi réducteur que le ou les M′ de l'anode, dans de l'ammoniac liquide en présence d'un amidure de métal alcalin $MNH_2$.

Selon une autre caractéristique additionnelle de la présente invention, ledit amidure de métal alcalin $MNH_2$ est préparé in situ dans l'ammoniac liquide servant à la formation de l'ammoniacate, par réaction dudit ammoniac sur un métal alcalin M en présence d'un catalyseur.

On relèvera enfin que les métaux ne réagissent pas, ou pratiquement pas, c'est-à-dire infiniment lentement, sur les molécules d'ammoniac. Une telle réaction nécessiterait en effet la présence de catalyseurs pour conduire à l'amidure correspondant.

D'autres caractéristiques et avantages particuliers de la présente invention apparaîtront à la lecture de la description détaillée faite ci-après notamment en référence à divers exemples d'ammoniacates particuliers et de générateurs électrochimiques les utilisant en tant que milieux électrolytiques, ainsi qu'aux dessins annexés sur lesquels:

- la figure 1 représente:

courbe a: voltampérogramme tracé à une électrode de $(SN)_x$ plongeant dans l'ammoniacate d'iodure de sodium; vitesse de balayage: 0,05 $Vs^{-1}$; référence: Ag↓/Ag⁺ ($|Ag^+| = 5\ 10^{-3}M$); surface du matériau: 4 $mm^2$.

courbe b: voltampérogramme tracé à une électrode de platine poli plongeant dans NaI $3,3NH_3$; vitesse de balayage: 0,05 $Vs^{-1}$; référence: Ag↓/$Ag^+$; surface de l'électrode de Pt: 0,8 $mm^2$.

- la figure 2 représente des courbes caractéristiques courant-tension d'une pile dont le pôle ⊖ est constitué par du sodium et dont le pôle ⊕ est constitué par différents matériaux.

Il convient tout d'abord d'insister sur le fait que la présente invention permet d'éviter l'inconvénient résultant de la propriété de l'ammoniac de dissoudre les métaux réducteurs tels que les métaux alcalins et alcalinoterreux. Cette propriété de l'ammoniac, interdisant la réalisation de générateurs électrochimiques sans compartiments séparés, se trouve écartée lorsque l'ammoniac est en présence d'une quantitié importante d'un sel dont le cation est le même que celui du métal réducteur ou est le cation d'un métal plus réducteur que le métal ou les métaux utilisés à l'anode dont or veut précisément éviter toute dissolution ou toute autre réaction parasite d'oxydo-réduction.

Les ammoniacates utilisés dans le cadre de la présente invention sont des composés d'addition liquides ou solides associant une ou plusieurs molécules d'un sel ou de plusieurs sels à une ou plusieurs molécules d'ammoniac. Il s'agit donc en quelque sorte de composés analogues aux hydrates dans lesquels les molécules d'eau seraient remplacées par des molécules d'ammoniac.

L'ammoniac ressemble beaucoup à l'eau pour toutes les propriétés qui donnent à ce liquide sa position remarquable parmi tous les solvants. Si l'ammoniac dissout moins bien, en général, les sels que l'eau, il est supérieur à tous les autres solvants.

Les propriétés de l'eau et de l'ammoniac sont résumées dans le tableau I ci-dessous.

Tableau I
Constantes physiques de l'ammoniac et de l'eau

| | Ammoniac | Eau |
|---|---|---|
| Point d'ébullition | −33,35 | 100 |
| Point de fusion | −77,7 | 0 |

Tableau I (suite)
Constantes physiques de l'ammoniac et de l'eau

| | Ammoniac | Eau |
|---|---|---|
| Densité | 0,61 à +20°C<br>0,65 à −10°C<br>0,69 à −40°C | 1 à +4°C |
| Température critique | 132°C | 374°C |
| Chaleur spécifique en cal/g | 1,10 à 0°C | 1,00 à 20°C |
| Chaleur de vaporisation | 327 à −33°C | 541 à 100°C |
| Chaleur de fusion | 83,9 à −77°C | 79,7 à 0°C |
| Constante diélectrique | 22 à −33°C<br>17 à +20°C | 81,7 à +18°C |
| Poids moléculaire | 17 | 18 |
| Viscosité en centipoises | 0,2543 à −33,5°C<br>0,1411 à +20°C | 1,0050 à +20°C |
| Moment dipolaire | 1,49 × $10^{-18}$ues | 1,85 × $10^{-18}$ues |

Le point d'ébullition anormalement élevé de l'ammoniac est l'indice, comme pour l'eau, que l'ammoniac peut former des liaisons hydrogène. Des substances qui sont capables de former des liaisons hydrogène avec l'ammoniac sont donc très solubles. Le caractère basique de l'ammoniac est également responsable de la solubilité de certains composés. Souvent il est difficile de distinguer les effets dûs à la basicité de l'ammoniac des effets dûs à la tendance à former des liaisons hydrogène; par exemple: pour la solubilité des phénols. Un phénomène lié à la basicité de l'ammoniac est sa tendance à coordiner les ions des métaux de transition tels que $Ni^{2+}$, $Cu^{2+}$, $Zn^{2+}$ et $Ag^{+}$. De façon générale, les sels de tels métaux sont très solubles dans l'ammoniac liquide.

Pour illustrer la remarquable propriété de solvant de l'ammoniac, on mentionnera ci-après à simple titre indicatif quelques valeurs exprimées en grammes de sel dissous par 100 g d'ammoniac liquide à 25°C.

Tableau II

| NaF | NaCl | NaBr | NaI |
|---|---|---|---|
| 0,35 | 3,02 | 137,95 | 161,90 |
| KF | KCl | KBr | KI |
| 0 | 0,04 | 13,50 | 182 |
| | $NH_4Cl$ | $NH_4Br$ | $NH_4I$ |
| | 102,5 | 237,9 | 368,5 |
| | AgCl | AgBr | AgI |
| | 0,83 | 5,92 | 206,84 |

La constante diélectrique de l'ammoniac, égale à 22 à son point d'ébullition (−33°C), est considérablement plus basse que celle de l'eau, 80 à 20°C, mais plus élevée que celle de l'acide acétique par exemple, 6,6. Comme on peut s'y attendre les solubilités des sels ioniques dans l'ammoniac sont intermédiaires entre celles dans l'eau et celles dans l'acide acétique, sauf pour les sels dont les anions sont très polarisables à cause des forces de London. Quelques solubilités assez représentatives de chacun de ces solvants sont groupées dans le tableau III ci-après.

Tableau III
Solubilités de quelques sels ioniques dans l'eau, l'ammoniac, l'acide acétique et l'hydrazine (en g par 100 g de solvant à 25°C)

| sel \ solvant | Eau | Ammoniac | Acide acétique | Hydrazine |
|---|---|---|---|---|
| $LiNO_3$ | 52,2 | 243,7 | 10,3 | |
| $NaNO_3$ | 91,8 | 97,6 | 0,17 | 100 |
| $KNO_3$ | 37,8 | 10,4 | 0,18 | 14 |
| NaCl | 37 | 3,02 | 0,07 | 8 |
| NaI | 190 | 162 | | 64 |
| KBr | 70 | 13,5 | | 60 |
| KI | 147 | 182 | | 175 |

Dans ce tableau III figure également l'hydrazine, solvant aussi basique que l'ammoniac, mais de constante diélectrique beaucoup plus élevée (52 à 20°C).

Un ammoniacate liquide peut être considéré comme une solution très concentrée d'un sel minéral dans de l'ammoniac liquide. Le rapport du nombre de molécules de sel au nombre de molécules d'ammoniac dépend de la température et de la pression. Pour une solution saturée, à une température donnée, la pression de dissociation permet d'apprécier le lien entre l'ammoniac et le composé qui lui est associé. On peut aussi prendre en considération la chaleur de formation.

Par conséquent des sels minéraux très solubles dans l'ammoniac liquide donneront des ammoniacates liquides si la solution, saturée ou non, est en équilibre avec l'ammoniac gazeux sous une pression très inférieure à la pression de vapeur saturante de ce gaz à la même température.

Les ammoniacates liquides que l'on peut considérer comme les plus intéressants dans le cadre de la présente invention sont ceux pour lesquels la pression d'ammoniac est inférieure ou égale à une atmosphère à la température ordinaire. A titre d'exemple, on mentionnera ci-après dans le tableau IV quelques exemples de sels illustrant la stabilité des ammoniacates liquides.

Tableau IV

| Sel | $NH_4Br$ | $NH_4I$ | NaI | KI |
|---|---|---|---|---|
| Température pour laquelle $pNH_3 = 1$ Atm. | 4°C | 25°C | 42°C | -15°C |

On signalera qu'il existe également d'autres ammoniacates liquides au voisinage de la température ordinaire ou à des températures plus élevées. C'est ainsi que le perchlorate de lithium donne un ammoniacate liquide à la température ordinaire. Par ailleurs les halogénures d'aluminium qui absorbent l'ammoniac avec un grand dégagement de chaleur conduisent à des ammoniacates liquides à des températures supérieures à 100°C.

Tout comme dans le cas des hydrates, il existe des ammoniacates se présentant à l'état solide et tous les sels qui donnent des ammoniacates liquides peuvent donner des composés d'addition solides avec les molécules d'ammoniac.

Les ammoniacates solides conduisent le courant et donc servent d'électrolyte solides dans le cadre de la présente invention. Ils peuvent en particulier être utilisés à l'état fritté.

A titre d'exemples d'ammoniacates solides utilisables en tant que matériau électrolytique, on citera les halogénures de lithium de formule:

$LiX, zNH_3$
avec
$X = Cl, Br$, et
$1 \leqslant z \leqslant 4$.

Le tableau V ci-après indique les températures de dissociation des ammoniacates de bromure et de chlorure de lithium sous pression atmosphérique $[p(NH_3) \leqslant 1$ Atm.]

Tableau V
Température de dissociation des ammoniacates $LiX,zNH_3$ $[p(NH_3) \leqslant 1$ atmosphère]

| Ammoniacates | $\theta$ = température de dissociation en °C | |
|---|---|---|
| $LiCl,NH_3$ | $\theta > 85$ | fond quand |
| $LiBr,NH_3$ | $\theta > 95$ | $\theta > 97$ |
| $LiCl,2NH_3$ | $85 > \theta > 60$ | |
| $LiBr,2NH_3$ | $95 > \theta > 87$ | |
| $LiCl,3NH_3$ | $60 > \theta > 15$ | |
| $LiBr,3NH_3$ | $87 > \theta > 71,5$ | |
| $LiCl,4NH_3$ | $\theta < 15$ | |
| $LiBr,4NH_3$ | $\theta < 71,5$ | |

D'autres ammoniacates solides, tels que les ammoniacates d'halogénures d'aluminium par exemple de $AlI_3$ et $AlCl_3$, peuvent également être mentionnés. On notera en particulier que le chlorure d'aluminium permet d'obtenir un ammoniacate très stable de formule $AlCl_3, 6NH_3$. Ce dernier perd toutefois une molécule d'ammoniac vers 180°C pour donner $AlCl_3, 5NH_3$ qui fond vers 380°C et bout vers 450°C.

D'autres exemples d'ammoniacates apparaîtront à la lecture des quelques exemples particuliers de générateurs mentionnés ultérieurement.

A l'exception de l'amidure de potassium $KNH_2$, les autres amidures de métaux alcalins sont peu solubles. Dans le cas particulier où les amidures sont préparés directement in situ dans de l'ammoniac anhydre, ou ne contenant que de très faibles quantités d'eau, ils sont obtenus sous la forme de grains très fins non enrobés par l'hydroxyde correspondant MOH et sont donc très réactifs vis-à-vis de tout composé donneur de protons tel que l'eau. Du fait de cette forte réactivité, les amidures de métaux alcalins réagissent quantitativement sur l'eau contenue dans les sels de cations métalliques M″X lorsqu'ils sont ajoutés à l'ammoniac:

$$\underset{\downarrow}{\underline{MNH_2}} + H_2O \rightarrow \underset{\downarrow}{\underline{MOH}} + NH_3$$

La totalité de l'eau contenue dans le sel de cation métallique M″X se trouve donc transformée en hydroxyde MOH, peu soluble, et qui ne réagit pas avec le métal M′ ou les métaux M′ constituants l'anode du générateur électrochimique.

De manière à être certain d'éliminer la quantité totale d'eau contenue dans le sel de cation métallique M″X, l'amidure de métal alcalin $MNH_2$ sera présent en léger excès stoechiométrique par rapport à cette quantité d'eau contenue dans le sel de cation métallique M″X.

Dans le cas particulier correspondant au mode de mise en œuvre le plus avantageux de la présente invention où l'amidure est formé in situ, le sel de cation métallique M″X ne devra être ajouté à l'ammoniac liquide qu'après achèvement complet de la réaction de formation de cet amidure.

Dans la pratique, on obtient des résultats parfaitement satisfaisants lorsque le métal M de l'amidure est choisi au moins aussi réducteur que le métal M′ de l'anode ou que le métal M″ de l'ammoniacate. Ce choix particulier permet en effet d'éviter que, lors de l'addition du sel M″X dans l'ammoniac, on obtienne un échange entre les métaux M et M″, ce qui conduirait à un ammoniacate du sel MX, lequel pourrait être réduit par le métal M′ de l'anode du générateur électrochimique.

Dans la pratique on a également constaté que l'on obtenait d'excellents résultats lorsque l'on choisissait le métal M de l'amidure identique au métal M″ de l'ammoniacate.

Dans le cas particulier où l'on prépare un ammoniacate anhydre sous la forme liquide, ce dernier peut être récupéré très facilement après décantation et séparation de l'amidure $MNH_2$ en excès ainsi que de l'hydroxyde MOH provenant de la réaction quantitative de l'amidure $MNH_2$ sur l'eau contenue dans le sel M″X. Une fois l'ammoniacate anhydre ainsi préparé, il est infiniment plus facile d'en retirer les molécules de $NH_3$, que d'éliminer les molécules d'eau contenues dans le sel de départ. Il est ainsi possible d'obtenir des sels qui sont rigoureusement anhydres.

Selon une variante de mise en œuvre du procédé de la présente invention, il est également possible d'introduire dans l'ammoniac un amidure commercial qui aura cependant déjà subi une hydrolyse partielle due à l'humidité athmosphérique. Un tel amidure commercial se présente alors sous la forme de grains enrobés d'une fine pellicule d'hydroxyde MOH qui est relativement peu soluble et qui inhibe par conséquent la réactivité de l'amidure par rapport aux composés donneurs de protons tels que l'eau. Dans pareil cas, il convient alors de broyer plus finement ce réactif à l'abri de toute trace d'humidité, afin d'augmenter sa réactivité permettant d'assurer la déshydratation totale ultérieure des ammoniacates.

On indiquera ci-après à titre d'illustration un exemple particulier de préparation d'ammoniacate liquide et anhydre, à savoir de perchlorate de lithium.

La composition choisie d'ammoniacate de perchlorate de lithium correspond environ à la formule $LiClO_4 4NH_3$. La quantité préparée a été de 800 g, correspondant à 500 g de $LiClO_4$ et 300 g de $NH_3$.

Le perchlorate de lithium utilisé contenait environ 3% en poids d'eau soit ici 15 t en tout. Il convient donc de prévoir l'utilisation de 7 g de lithium.

Dans une masse de 300 g de $NH_3$ correspondant à un volume de 430 ml à une température réactionnelle d'environ −40°C, on ajoute 7 g de lithium en présence d'un catalyseur par exemple constitué par un fil métallique recouvert de noir de platine ou encore par un fil de fer rouillé. Le lithium réagit alors sur l'ammoniac selon le schéma réactionnel:

$$Li + NH_3 \rightarrow LiNH_2 + 1/2\, H_2$$

Ce n'est que lorsque la totalité du lithium aura réagi avec l'ammoniac que l'on ajoute $LiClO_4$ au solvant tout en laissant la température croître jusqu'à environ 20°C. Après décantation, on obtient l'ammoniacate liquide de perchlorate de lithium à l'état rigoureusement anhydre et dépourvu de $LiNH_2$ et de LiOH.

On mentionnera ci-après quelques exemples particuliers de générateurs selon l'invention:

Exemple 1

Pile: Na/Ammoniacate d'iodure de Sodium/$(SN)_x$

Les ammoniacates d'iodure de sodium de formule $NaI,xNH_3$ se sont avérés particulièrement intéressants comme électrolyte, en particulier parce qu'ils sont très bon conducteurs. La tension de vapeur de l'ammoniac de ces composés est considérablement plus basse que la tension de vapeur saturante de l'ammoniac à la même température. Les ammoniacates d'iodure de sodium peuvent se présenter soit sous forme liquide, soit sous forme d'un gel. Ainsi à température ordinaire, l'ammoniacate d'iodure de sodium est liquide entre les deux compositions limites NaI, $3NH_3$ et NayI, 3,5 $NH_3$. En deça et au-delà de ces deux compositions limites, c'est un gel très conducteur, tout comme l'ammoniacate liquide.

Du tableau VI ci-après, il ressort que l'ammoniacate NaI, $3,3NH_3$ est particulièrement intéressant. Il peut en outre être utilisé dans une gamme de températures de −80°C à + 80°C.

Tableau VI
Caractéristiques de l'ammoniacate NaI,$xNH_3$

| NaI,$xNH_3$ | | | |
|---|---|---|---|
| x | 3 | 3,3 | 3,55 |
| Masse volumique à 20°C | 1,63 | 1,58 | 1,54 |
| p($NH_3$) à 20°C | 37,5 | | |
| à 80°C | | 43 | 55 |
| en cm Hg | 100 | | |
| Concentration en NaI en $M.1^{-1}$ à 20°C | 6 M | 5,75 M | 5 M |

Dans un tel milieu électrolytique, riche en ions $Na^+$, le sodium n'est pas soluble et ne réagit pas sur l'ammoniac. Ce métal peut donc constituer l'anode par exemple d'une pile sans compartiment. Comme matériau cathodique, on a par exemple utilisé le polynitrure de soufre $(SN)_x$ également insoluble. Le soufre, soluble mais réagissant sur $NH_3$ n'a pas été retenu dans la pratique. Le polynitrure de soufre qui peut être utilisé pur ou en mélange avec du graphite, est un polymère minéral synthétique qui présente une conductivité de type métallique à la température ambiante, de l'ordre de $10^3\Omega^{-1}cm^{-1}$. Il peut donner des composés d'insertion avec le brome (réversibles), le bromure d'iode (IBr) et les métaux alcalins (partiellement réversibles).

L'utilisation de polynitrure de soufre comme matériau cathodique et de sodium comme matériau anodique conduit à d'excellents résultats pratiques, et permet notamment d'obtenir des piles amorçables utilisant l'ammoniacate d'iodure de sodium. En effet, l'ammoniac étant liquide sous pression, dès que la température est supérieure à −33°C, son injection, au moment où l'on veut disposer en toute certitude de l'énergie d'un générateur, est aisée dans une cellule contenant les électrodes et le sel (ou le mélange de sels) qui va (ou vont) se combiner avec les molécules de $NH_3$. On peut prévoir l'injection de l'ammoniacate (ou du mélange d'ammoniacates) dans la cellule contenant les électrodes.

Dans l'ammoniacate d'iodure de sodium qui s'oxyde à partir de + 0,6 V [$3I^- - 2e^- \rightarrow I_3^-$] et qui se réduit à partir de -2,1 V [$Na^+ + e^3 \rightarrow Na\downarrow$], par rapport à la référence $Ag/Ag^+$ ($5.10^{-3}$M), sur électrode de platine poli, une électrode de polynitrure de soufre a un potentiel de repos de + 0,3 V (par rapport à$Ag/Ag^+$).

A partir de ce potentiel, on observe la croissance d'un mur en réduction et d'un mur en oxydation (voir figure 1).

Une électrode de $(SN)_x$ et une électrode de sodium plongeant dans NaI, 3,3 $NH_3$ non reliées entre elles ne réagissent pas sur le solvant. Leur différence de potentiel (qui est égal à la f.e.m. de la pile en circuit ouvert) est de 2,4 V.

Cette différence de potentiel est d'ailleurs la même que le pôle + constitué par une électrode comprimée de $(SN)_x$ dispersé dans du graphite, par $S_4N_4$ dispersé dans du graphite, ou même par du graphite seul. En revanche, les courbes caractéristiques, tension courant, ont une allure sensiblement différente (voir figure 2).

Ainsi, la puissance disponible à chaque tension, est de beaucoup la plus élevée quand la cathode est constituée de $(SN)_x$ dispersé dans du graphite. Dans le cas de $(SN)_x$ pur, il semble qu'un phénomène de saturation joue. Avec $(SN)_x$ pur ou $(SN)_x$ dispersé dans du graphite au pôle +, il semble que l'on puisse avoir une capacité spécifique réelle supérieure à 40 Ah/kg, soit une énergie spécifique supérieure à 80 Wh $kg^{-1}$. En effet, si, comme cela est très vraisemblable, il se forme avec le polynitrure de soufre des composés d'insertion du sodium, on peut en augmentant le rapport surface/masse, largement dépasser la capture de 0,1 atome de sodium par motif SN [nombre actuellement mesuré pour un cristal de $(SN)_x$ cubique de quelques mm de côté] et ainsi accroître l'énergie spécifique dans les même proportions.

Les courbes de décharge dans une résistance de 1000 Ohms de piles constituées de $(SN)_x$ pur, ou de $(SN)_x$ dispersé dans du graphite fritté, au pôle ⊕, et de sodium au pôle ⊖ montrent que les durées de vie par unité de masse et pour une surface identique sont du même ordre de grandeur pour $(SN)_x$ pur que $(SN)_x$ dispersé dans du graphite. Pour $S_4N_4$ dispersé dans le graphite la durée de vie est beaucoup plus faible; en outre avec ce matériau cathodique le courant et la tension ne sont pas stables (voir tableau VII).

Tableau VII
Courant et tension de décharges de diverses piles utilisant toutes le sodium au pôle ⊖

| Matériau cathodique au pôle ⊕ | Masse de matériau en g | Surface en $cm^2$ | Différence de potentiel en V | Intensité en mA | Quantité d'électricité / masse du matériau cathodique |
|---|---|---|---|---|---|
| $(SN)_x$ pur | 0,037 | 0,33 | >2,1 | >2 | 167,5 |
| $(SN)_x$/graphite 50-50 | 0,812 | 0,8 | >1,9 puis ≃ 1 | >2 puis ≃ 1 | 149 |

Tableau VII (suite)
Courant et tension de décharges de diverses piles utilisant toutes le sodium au pôle ⊖

| Matériau cathodique au pôle ⊕ | Masse de matériau en g | Surface en $cm^2$ | Différence de potentiel en V | Intensité en mA | Quantité d'électricité / masse du matériau cathodique |
|---|---|---|---|---|---|
| $S_4N_4$/graphite 50-50 | 0,605 | 0,8 | décroît continuellement de: 2,2 à 1 | décroît continuellement de: 2,3 à 1 | 28,3 |
| Graphite pur | 495 | 0,8 | chute rapidement de: 2,4 à 1 | chute rapidement de: 2,2 à 1,3 | 7,2 |

Dans l'ammoniacate d'iodure de sodium anhydre, les comportements du polynitrure de soufre $(SN)_x$ (pur ou dispersé dans du graphite) et du sodium, pour lequel aucun effet de passivation n'a été observé, ont ainsi permis de construire une pile amorçable de tension 2,4 V qui est nettement supérieure à la tension théorique de la pile sodium-soufre qui n'est que de 1,85 V. La possibilité de pouvoir utiliser cette pile dans un vaste domaine de températures de −80°C à + 80°C, avec de grandes densités de courant, sans risque d'explosion, la rend particulièrement attractive.

Exemple 2

Pile: Na/Ammoniacate d'iodure de Sodium/ $MnO_2$

Par rapport à la pile de l'exemple 1, cette pile utilisant du bioxyde de manganèse en tant que matériau cathodique a permis d'obtenir une force électromotrice de 2,8 V, c'est-à-dire supérieure de 400 mV par rapport à celle de l'exemple 1.

Exemple 3

Pile: Li/Ammoniacate de perchlorate de Lithium/$(SN)_x$

L'absorption de l'ammoniac par une molécule de perchlorate de lithium anhydre à 20°C peut aller jusqu'à 4,6 molécules de $NH_3$. A partir de 3,5 molécules de $NG_3$ on obtient un liquide. Au-delà de 4,3 molécules de $nH_3$ l'ammoniacate redevient solide. C'est le liquide de composition $LiClO_4$, $4NH_3$ qui a été utilisé dans cette étude (masse volumique environ 1,2). Tout comme l'ammoniacate NaI,3,3 $NH_3$, il s'agit d'un liquide très conducteur.

Dans cet ammoniacate de formule $LiClO_4$, $4NH_3$, le lithium n'est pas soluble et ne réagit pas avec $NH_3$.

La force électromotrice, en circuit ouvert est de 2,8 V. Comme dans le cas de la pile Na/NaI 3,3 $NH_3/(SN)_x$, on peut atteindre des densités en courant assez élevées lorsque $(SN)_x$ est bien dispersé dans du graphite.

Exemple 4

Pile: Li/Ammoniacate de perchlorate de Lithium/$MnO_2$

Comme dans le cas de l'exemple 3, le milieu électrolyte utilisé a été $LiClO_4,4NH_3$. La force électromotrice en circuit ouvert est de 3,2 V.

Exemple 5

Pile: Li/Ammoniacate de perchlorate de Lithium/CuO

Le milieu électrolyte utilisé reste toujours $LiClO_4,4NH_3$. La force électromotrice est de 2,64 V en circuit ouvert.

Exemple 6

Pile: Al/Ammoniacate de perchlorate D'Aluminium/$MnO_2$

Le milieu électrolyte utilisé est $AlCl_3$, $6NH_3$. La force électromotrice est de 1,8 V en circuit ouvert.

Exemple 7

Pile: Al/Ammoniacate de perchlorate D'Aluminium/CuO

Le milieu électrolyte utilisé est toujours $AlCl_3$, $6NH_3$. La force électromotrice est de 1,3 V en circuit ouvert.

Bien entendu, la présente invention ne se trouve pas limitée aux modes de réalisation précédemment décrits, mais il est parfaitement possible, sans pour autant sortir du cadre de la présente invention, d'en imaginer un certain nombre de variantes d'exécution. C'est ainsi, par exemple, que le matériau cathodique peut être constitué par des produits d'intercallation.

**Revendications**

1. Générateur électrochimique du type comportant une anode constituée par un métal ou un alliage métallique très réducteurs, une cathode constituée par un matériau réductible, ainsi qu'un électrolyte liquide ou solide contenant moins de 5% en poids d'eau dans lequel plongent l'anode et la cathode, caractérisé en ce que ledit électrolyte est constitué par un ou plusieurs ammoniacates d'au moins un sel d'un cation du métal de l'anode ou d'un sel d'un cation d'un métal plus réducteur que le métal ou l'alliage métallique de l'anode.

2. Générateur électrochimique selon la revendication 1, caractérisé en ce que le ou (les métaux) de l'anode et de ou des ammoniacate(s) est

ou sont choisi(s) parmi les métaux alcalins, alcalino-terreux et l'aluminium.

3. Générateur selon l'une des revendications 1 et 2, caractérisé en ce que le sel de l'ammoniacate est choisi parmi les halogénures et les perhalogénates.

4. Générateur selon l'une des revendications 1 à 3, caractérisé en ce que l'ammoniacate se présente sous forme liquide.

5. Générateur selon l'une des revendications 1 à 3, caractérisé en ce que l'ammoniacate se présente sous forme d'un gel.

6. Générateur selon l'une des revendications 1 à 3, caractérisé en ce que l'ammoniacate se présente sous forme solide.

7. Générateur selon la revendication 6, caractérisé en ce que l'ammoniacate se présente à l'état fritté.

8. Générateur selon la revendication 4, caractérisé en ce que l'ammoniacate répond à la formule:

$NaI,xNH_3$

avec $3 \leqslant x \leqslant 3,5$.

9. Générateur selon la revendication 4, caractérisé en ce que l'ammoniacate répond à la formule:

$LiClO_4,yNH_3$

avec $3,5 \leqslant y \leqslant 4,3$.

10. Générateur selon la revendication 6, caractérisé en ce que l'ammoniacate répond à la formule:

$LiX,zNH_3$

avec X = Cl, Br, et $1 \leqslant z \leqslant 4$.

11. Générateur selon la revendication 6, caractérisé en ce que l'ammoniacate répond à la formule:

$AlCl_3,nNH_3$

avec n = 5 ou 6.

12. Générateur selon l'une des revendications 1 à 11, caractérisé en ce que le matériau cathodique est choisi parmi CuO, $MnO_2$, AgO, $(SN)_x$ et les produits d'intercallation.

13. Générateur selon la revendication 12, caractérisé en ce que le matériau cathodique est constitué par du polynitrure de soufre dispersé dans du graphite.

14. Générateur selon la revendication 13, caractérisé en ce que le matériau cathodique est constitué par le mélange $(SN)_x$-graphite [50-50].

15. Procédé de préparation d'un générateur électrochimique selon l'une des revendications 1 à 14, comportant une anode constituée par un métal M′ ou un alliage de métaux M′, un électrolyte constitué par un ou plusieurs ammoniacates d'au moins un sel M″X d'un cation d'un métal M″ au moins aussi réducteur que le métal ou l'alliage métallique M′ de l'anode, caractérisé en ce que ledit ammoniacate est préparé à l'état anhydre par réaction dudit sel de cation métallique M″X dans de l'ammoniac liquide en présence d'un amidure de métal alcalin $MNH_2$.

16. Procédé de préparation d'un générateur électrochimique selon la revendication 15, caractérisé en ce que ledit amidure de métal alcalin $MNH_2$ est préparé in situ dans l'ammoniac liquide servant à la formation de l'ammoniacate, par réaction dudit ammoniac sur un métal alcalin M en présence d'un catalyseur.

17. Procédé de préparation selon la revendication 16, caractérisé en ce que la température de réaction de formation in situ de l'amidure $MNH_2$ est d'environ −40°C.

18. Procédé de préparation selon l'une des revendications 16 et 17, caractérisé en ce que ledit catalyseur est constitué par un fil métallique recouvert de noir de platine.

19. Procédé de préparation selon l'une des revendications 16 à 18, caractérisé en ce que le sel de cation métallique M″X n'est ajouté dans l'ammoniac liquide qu'après achèvement complet de la réaction de formation in situ de l'amidure $MNH_2$.

20. Procédé de préparation selon l'une des revendications 15 à 19, caractérisé en ce que l'amidure de métal alcalin $MNH_2$ est présent en léger excès stoechiométrique par rapport à la quantité d'eau contenue dans le sel de cation métallique M″X.

21. Procédé de préparation selon l'une des revendications 15 à 20, caractérisé en ce que le métal M de l'amidure est choisi au moins aussi réducteur que le métal M′ de l'anode ou que le métal M″ de l'ammoniacate.

22. Procédé de préparation selon l'une des revendications 15 à 21, caractérisé en ce que le métal M de l'amidure est choisi identique au métal M″ de l'ammoniacate.

23. Procédé de préparation selon l'une des revendications 15 à 22, caractérisé en ce que l'ammoniacate anhydre est récupéré à l'état liquide après décantation et séparation de l'amidure $MNH_2$ en excès et de l'hydroxyde MOH provenant de la réaction quantitative de l'amidure $MNH_2$ sur l'eau contenue dans le sel M″X.

24. Procédé de préparation selon l'une des revendications 15 à 23, caractérisé en ce que ledit amidure de métal alcalin est l'amidure de lithium.

**Patentansprüche**

1. Elektrochemischer Generator von der Art, welcher aufweist eine aus einem stark reduzierenden Metall oder Metallegierung bestehende Anode, eine aus einem reduzierbaren Material bestehende Kathode sowie einem flüssigen oder festen Elektrolyt, der wenigstens 5 Gew.-% Wasser enthält und in den die Anode und die Kathode eintauchen, dadurch gekennzeichnet, dass der Elektrolyt von einem oder mehreren Ammoniakaten wenigstens eines Salzes eines Metallkations der Anode oder eines Salzes eines Metallkations

gebildet ist, welches reduzierender als das Metall oder die Metallegierung der Anode ist.

2. Elektrochemischer Generator nach Anspruch 1, dadurch gekennzeichnet, dass das oder die Metall(e) der Anode und das oder die Ammoniakat(e) aus den Alkalimetallen, den Erdalkalimetallen und Aluminium gewählt sind.

3. Generator nach Anspruch 1 oder 2, dadurch gekennzeichnet, dass das Salz des Ammoniakates ausgewählt ist unter den Halogeniden und den Perhalogenaten.

4. Generator nach einem der Ansprüche 1 bis 3, dadurch gekennzeichnet, dass das Ammoniakat in flüssiger Form vorliegt.

5. Generator nach einem der Ansprüche 1 bis 3, dadurch gekennzeichnet, dass das Ammoniakat in der Form eines Gels vorliegt.

6. Generator nach einem der Ansprüche 1 bis 3, dadurch gekennzeichnet, dass das Ammoniakat in fester Form vorliegt.

7. Generator nach Anspruch 6, dadurch gekennzeichnet, dass das Ammoniakat in einem gebrannten Zustand vorliegt.

8. Generator nach Anspruch 4, dadurch gekennzeichnet, dass für das Ammoniakat die Formel gilt:

$NaI,xNH_3$

mit $3 \leqslant x \leqslant 3,5$.

9. Generator nach Anspruch 4, dadurch gekennzeichnet, dass für das Ammoniakat die Formel gilt:

$LiClO_4,yNH_3$

mit $3,5 \leqslant y \leqslant 4,3$.

10. Generator nach Anspruch 6, dadurch gekennzeichnet, dass für das Ammoniakat die Formel gilt:

$LiX,zNH_3$

mit X = Cl, Br, und $1 \leqslant z \leqslant 4$.

11. Generator nach Anspruch 6, dadurch gekennzeichnet, dass für das Ammoniakat die Formel gilt:

$AlCl_3,nNH_3$

mit n = 5 oder 6.

12. Generator nach einem der Ansprüche 1 bis 11, dadurch gekennzeichnet, dass das Kathodenmaterial ausgewählt unter CuO, $MnO_2$, AgOI, $(SN)_x$ und Inter-Kallationsverbindungen wird.

13. Generator nach Anspruch 12, dadurch gekennzeichnet, dass das Kathodenmaterial von in Graphit dispergiertem Schwefelpolynitrid gebildet ist.

14. Generator nach Anspruch 13, dadurch gekennzeichnet, dass das Kathodenmaterial aus einer Mischung $(SN)_x$-Graphit [50-50] gebildet ist.

15. Verfahren zur Herstellung eines elektrochemischen Generators nach einem der Ansprüche 1 bis 14 mit einer aus einem Metall M′ oder einer Metallegierung M′ gebildeten Anode, mit einem Elektrolyt, der von einem oder mehreren Ammoniakaten wenigstens eines Salzes M″X eines Kations eines Metalls M″ gebildet ist, welches ebenso reduzierend wie das Metall oder die Metallegierung M′ der Anode ist, dadurch gekennzeichnet, dass das Ammoniakat im wasserfreien Zustand durch Reaktion des Salzes des metallischen Kat M″X in flüssigem Ammoniak in Gegenwart eines Alkalimetallamides $MNH_2$ hergestellt wird.

16. Verfahren zur Herstellung eines elektrochemischen Generators nach Anspruch 15, dadurch gekennzeichnet, dass das Alkalimetallamid $MNH_2$ in situ in dem flüssigen Ammoniak, der zur Bildung des Ammoniakats dient, durch Reaktion des Ammoniaks mit einem Alkalimetall M in Gegenwart eines Katalysators hergestellt wird.

17. Verfahren zur Herstellung nach Anspruch 16, dadurch gekennzeichnet, dass die Reaktionstemperatur zur Bildung des Amids $MNH_2$ in situ ungefähr −40°C beträgt.

18. Verfahren zur Herstellung nach Anspruch 16 oder 17, dadurch gekennzeichnet, dass der Katalysator aus einem Metallnetz besteht, welches mit Platinschwarz überzogen ist.

19. Verfahren zur Herstellung nach einem der Ansprüche 16 bis 18, dadurch gekennzeichnet, dass das Salz des metallischen Kations M″X erst nach vollständigem Abschluss der Bildungsreaktion des Amids $MNH_2$ in situ hinzugegeben wird.

20. Verfahren zur Herstellung nach einem der Ansprüche 15 bis 19, dadurch gekennzeichnet, dass das Alkalimetallamid $MNH_2$ mit geringem stöchiometrischen Überschuss in Bezug auf die in dem Salz des metallischen Kations M″X enthaltene Wassermenge vorhanden ist.

21. Verfahren zur Herstellung nach einem der Ansprüche 15 bis 20, dadurch gekennzeichnet, dass das Metall M des Amids wenigstens ebenso reduzierend wie das Metall M′ der Anode oder das Metall M″ des Ammoniakats gewählt wird.

22. Verfahren zur Herstellung nach einem der Ansprüche 15 bis 21, dadurch gekennzeichnet, dass das Metall M des Amids identisch zu dem Metall M″ des Ammoniakats ausgewählt wird.

23. Verfahren zur Herstellung nach einem der Ansprüche 15 bis 22, dadurch gekennzeichnet, dass das wasserfreie Ammoniakat wieder im flüssigen Zustand nach Dekantieren und Trennen des überschüssigen Amids $MNH_2$ und des Hydroxyds MOH wiedergewonnen wird, welches von der quantitativen Reaktion des Amids $MNH_2$ mit dem in dem Salz M″X enthaltenen Wasser herstammt.

24. Verfahren zur Herstellung nach einem der Ansprüche 15 bis 23, dadurch gekennzeichnet, dass das Alkalimetallamid Lithiumamid ist.

**Claims**

1. Electrochemical generator of the type comprising an anode constituted by a very reducing metal or metal alloy, a cathode constituted by a

reducible material, and a liquid or solid electrolyte containing less than 5% by weight of water in which the anode and the cathode are immersed, characterised in that the said electrolyte is constituted by one or more ammoniacates of at least one salt of a cation of the metal of the anode or of a salt of a cation of a metal more reducing than the metal or the metal alloy of the anode.

2. Electrochemical generator according to claim 1, characterised in that the metal (or metals) of the anode and of the ammoniacate(s) is or are chosen from among the alkali metals, the alkaline-earth metals and aluminium.

3. Generator according to one of claims 1 and 2, characterised in that the salt of the ammoniacate is chosen from among the halides and the perhalogenates.

4. Generator according to anyone of claims 1 to 3, characterised in that the ammoniacate is in liquid form.

5. Generator according to anyone of claims 1 to 3, characterised in that the ammoniacate is in the form of a gel.

6. Generator according to anyone of claims 1 to 3, characterised in that the ammoniacate is in solid form.

7. Generator according to claim 6, characterised in that the ammoniacate is in the fritted state.

8. Generator according to claim 4, characterised in that the ammoniacate corresponds to the formula:

$NaI,xNH_3$

with $3 \leqslant x \leqslant 3.5$.

9. Generator according to claim 4, characterised in that the ammoniacate corresponds to the formula:

$LiClO_4,yNH_3$

with $3.5 \leqslant y \leqslant 4.3$.

10. Generator according to claim 6, characterised in that the ammoniacate corresponds to the formula:

$LiX,zNH_3$

with X = Cl, Br, and $1 \leqslant z \leqslant 4$.

11. Generator according to claim 6, characterised in that the ammoniacate corresponds to the formula:

$AlCl_3,nNH_3$

with n = 5 or 6.

12. Generator according to anyone of claims 1 to 11, characterised in that the cathodic material is chosen from among CuO, $MnO_2$, AgO, $(SN)_x$ and the intercalation products.

13. Generator according to claim 12, characterised in that the cathodic material is constituted by sulphur polynitride dispersed in graphite.

14. Generator according to claim 13, characterised in that the cathodic material is constituted by the mixture $(SN)_x$-graphite (50–50).

15. Process for preparing an electrochemical generator according to anyone of claims 1 to 14, comprising an anode constituted by a metal M′ or a metal alloy M′, an electrolyte constituted by one or more ammoniacates of at least one salt M″X of a cation of a metal M″ at least as reducing as the metal or metal alloy M′ of the anode, characterised in that the said ammoniacate is prepared in the anhydrous state by reaction of the said metal cation salt M″X in liquid ammonia in the presence of an alkali metal amide $MNH_2$.

16. Process for preparing an electrochemical generator according to claim 15, characterised in that the said alkali metal amide $MNH_2$ is prepared in situ in the liquid ammonia serving for the formation of the ammoniacate by reaction of the said ammonia with an alkali metal M in the presence of a catalyst.

17. Process of preparation according to claim 16, characterised in that the reaction temperature of the formation of the amide $MNH_2$ in situ is about −40°C.

18. Process of preparation according to either of claims 16 and 17, characterised in that the said catalyst is constituted by a wire covered with platinum black.

19. Process of preparation according to anyone of claims 16 to 18, characterised in that the metal cation salt M″X is added to the liquid ammonia only after complete conclusion of the reaction of formation of the amide $MNH_2$ in situ.

20. Process of preparation according to anyone of claims 15 to 19, characterised in that the alkali metal amide $MNH_2$ is present in slight stoichiometric excess with respect to the amount of water contained in the metal cation salt M″X.

21. Process of preparation according to anyone of claims 15 to 20, characterised in that the metal M of the amide is chosen at least as reducing as the metal M′ of the anode or the metal M″ of the ammoniacate.

22. Process of preparation according to anyone of claims 15 to 21, characterised in that the metal M of the amide is chosen identical to the metal M″ of the ammoniacate.

23. Process of preparation according to anyone of claims 15 to 22, characterised in that the anhydrous ammoniacate is recovered in the liquid state after decantation and separation of the excess amide $MNH_2$ and the hydroxide MOH originating from the quantitative reaction of the amide $MNH_2$ with the water contained in the salt M″X.

24. Process of preparation according to anyone of claims 15 to 23, characterised in that the said alkali metal amide is lithium amide.

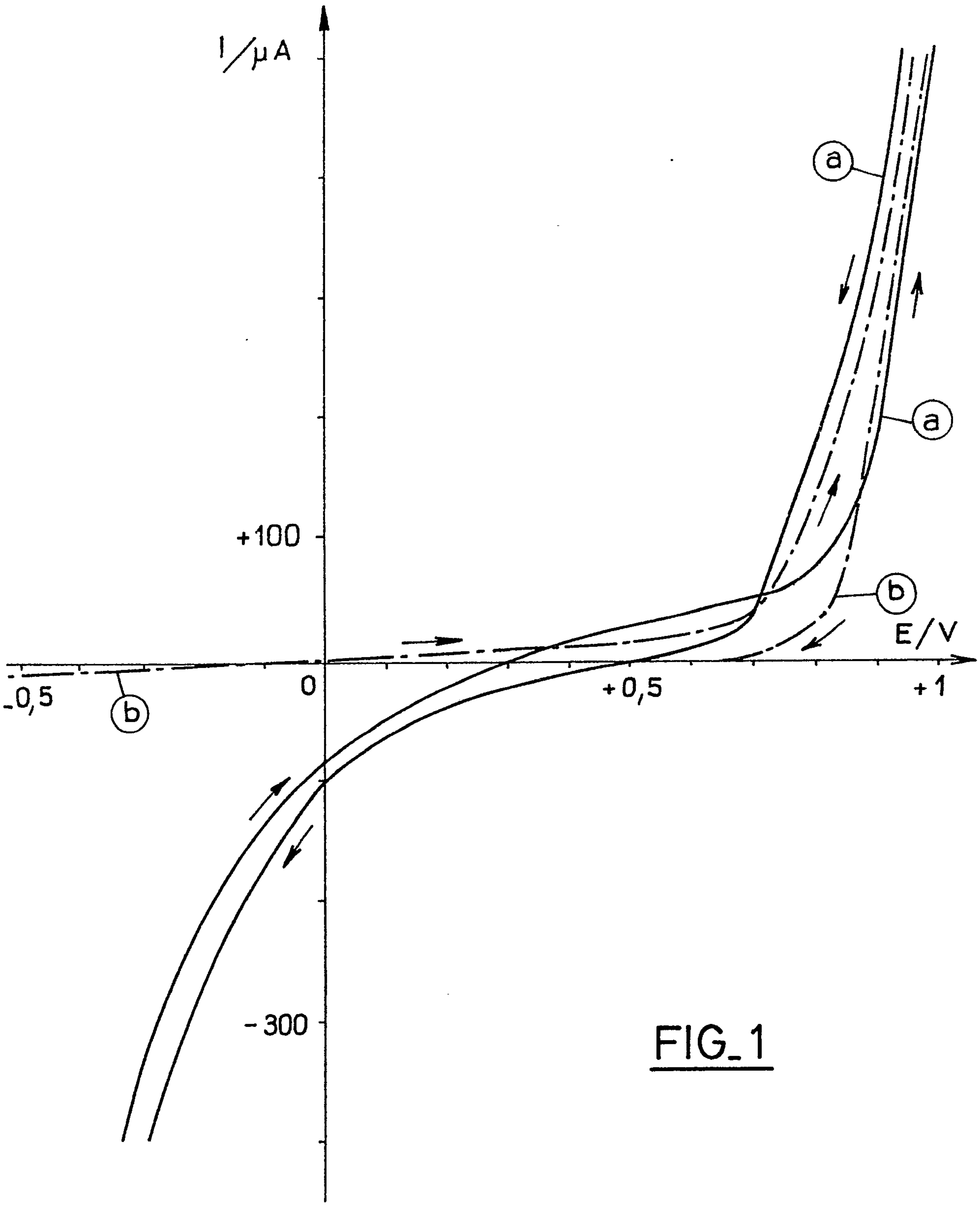


FIG_1

FIG_2

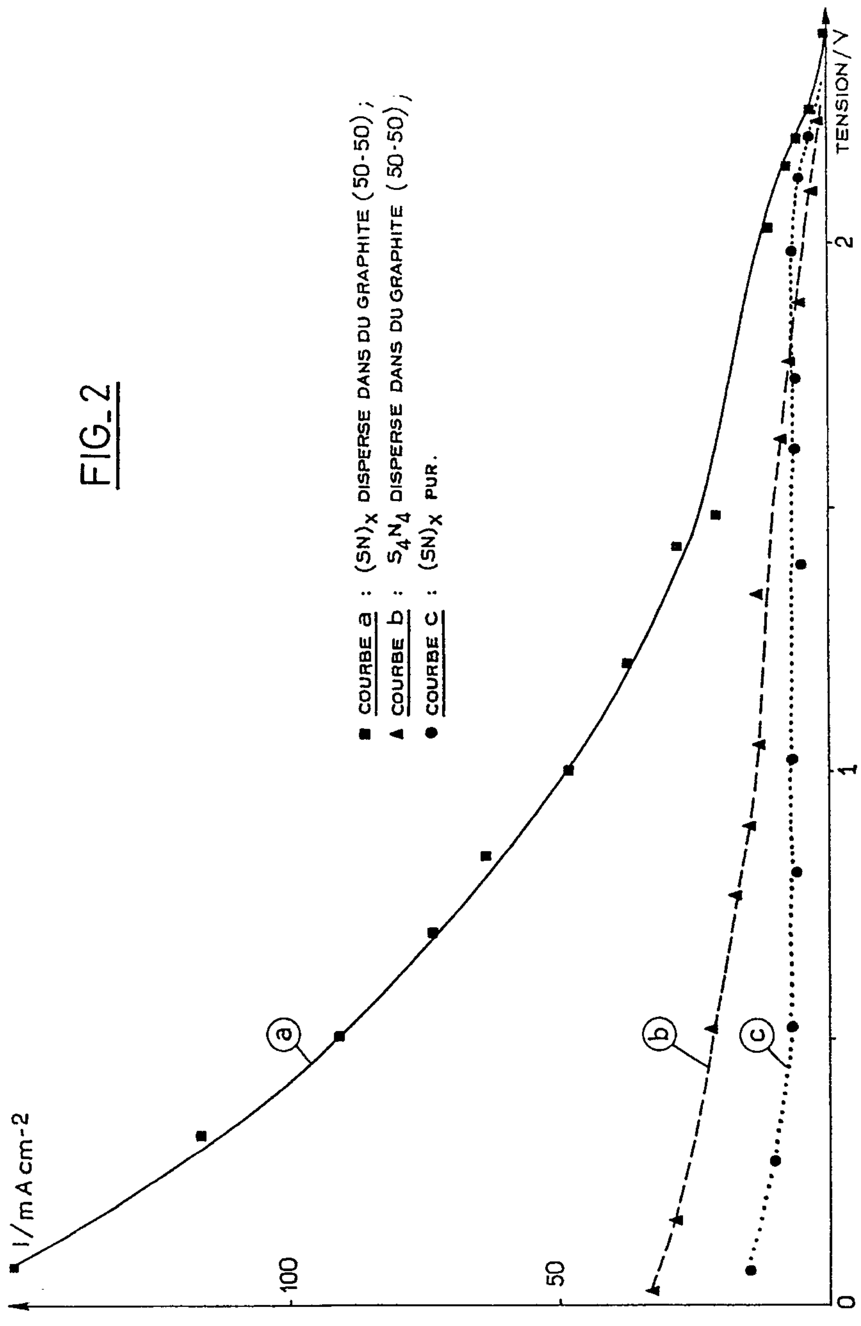
I / m A cm-2
100
50
0
1
2
TENSION / V
a
b
c
■ COURBE a : $(SN)_x$ DISPERSE DANS DU GRAPHITE (50-50) ;
▲ COURBE b : $S_4N_4$ DISPERSE DANS DU GRAPHITE (50-50) ;
● COURBE c : $(SN)_x$ PUR.